# EUROPEAN PATENT APPLICATION

(11) **EP 1 653 248 A1**
(43) Date of publication of application: **03.05.2006**
(21) Application number: 05077409.0
(22) Date of filing: 20.10.2005
(51) Int. Cl.: G01S 7/481, G01S 17/02, B60R 21/015

(54) **Actively-illuminating optical sensing system for an automobile**

(30) Priority: 28.10.2004 US 975264
(71) Applicant: Delphi Technologies, Inc., Troy, MI 48007 (US)
(72) Inventor: Troxell, John R., Sterling Height MI 48313 (US); Partin, Dale L., Ray Township MI 48096 (US); Kong, Hongzhi, 201315 Shanghai (CN); Bauson, William A., Kokomo IN 46901 (US); Sultan, Michel F., Troy MI 48098 (US); Harbach, Andrew P., Kokomo IN 46902 (US); Scharenbroch, Gregory K., Kokomo IN 46901 (US)
(74) Representative: Denton, Michael John

(57) **Abstract**

An automotive occupant position restraint apparatus (22) senses a position of an occupant (10, 16) of a motor vehicle (14). An optical energy source (30) emits optical energy that is substantially limited to a first range of wavelengths that corresponds to an atmospheric absorption peak. An optical energy receiver (32) receives the optical energy emitted by the optical energy source after the optical energy has been reflected within a passenger compartment (42) of the motor vehicle. A range of wavelengths that the receiver is operable to receive is substantially limited to a second range of wavelengths that corresponds to the atmospheric absorption peak.

## Description

### TECHNICAL FIELD

This invention relates generally to automotive optical sensing systems, and, more particularly, to a novel automotive optical sensing system that uses active illumination.

### BACKGROUND OF THE INVENTION

While the present invention is described, for illustrative purposes, as being applied to occupant classification and position detection in a vehicle, it will be understood that it may be employed in any automotive optical sensing system that benefits from active illumination and that must function in a wide variety of ambient lighting conditions. What is meant herein by "active illumination" is that the optical sensing system provides its own source of light. Examples of such automotive optical sensing systems include active night vision systems and lane tracking systems, for example.

Inflatable restraints, or air bags, are increasingly being used in vehicles to protect an occupant of a vehicle in the event of the vehicle being involved in a collision. Typically, a control system senses the occurrence of an accident and causes the air bag to deploy to protect the occupant from colliding with the windshield or dashboard, for example, of the vehicle. An optical, actively-illuminating, occupant proximity sensor system may comprise part of the control system. Such a system monitors the position of the occupant of the front-outboard passenger seat and automatically, i.e., without any action required of the driver or the passenger, determines whether to suppress deployment or allow deployment of the front air bag (and perhaps the side air bag also, if the vehicle is so equipped) applicable to this position. The determination of whether or not to suppress air bag deployment is made based on the occupant being in the "at-risk" zone or on classifying the occupant as being in a rear-facing infant seat (RFIS). Conversely, the system allows air bag deployment for a properly seated occupant, i.e., seated with hips back, rearward on the seat cushion and with back resting on the seat back, who is outside of the at-risk zone.

Upon determining the position/classification of the occupant of the front-outboard seat, the system sends a signal to the sensing and diagnostic module indicating whether to suppress or allow air bag deployment. The system also sends a signal to a display indicating whether the air bag is in a suppressed or an enabled state. If the air bag is in a suppressed state, the signal alerts the driver or passenger to take corrective action, if desirable.

There are many kinds of sensor systems under development. So far, there are mainly two kinds of occupant position sensors: infrared- and ultrasonic-based sensors. Compared to the ultrasonic sensor, the infrared sensor has the faster response time. An infrared occupant position sensor can classify and recognize an occupant in less than 10 milliseconds.

The typical infrared occupant position sensor has two main elements: an emitter and a receiver. The emitter is a light source and optical system that radiates infrared or near-infrared light and illuminates target objects. The receiver consists of an optical system and a detector. The optical system collects light scattered by the target objects and focuses the light signal on the detector.

It is desirable, for safety reasons as well as for aesthetics, for the light emitted and scattered in the optical system to not be visible to humans. In order to be substantially invisible, the light emitter needs to operate in a portion of the electromagnetic spectrum where the wavelength is greater than approximately 700 nm. The wavelength of the light also preferably needs to be less than approximately 1100 nm in order to be detected by image sensors having a reasonable cost, e.g., silicon-based image sensors. Thus, the useful range of wavelengths for actively-illuminated imager systems is approximately between 700 nm and 1100 nm.

With presently available technology, the most desirable wavelengths for operation of such systems are between 700 nm and 1100 nm. However, improvements in the performance of light emitting and light sensing technology at longer wavelengths will allow the viable extension of these concepts to longer wavelengths. Specifically, wavelengths up to 3000 nm will be shown to be useful in the present context, based upon the development of economically viable hardware.

Since an automotive optical system must operate outdoors, it is exposed to widely varying levels of ambient illumination. The performance of the optical sensor tends to be limited by these variations in the level of ambient light. From bright sunlight to twilight, the level of ambient lighting varies by a factor of 10,000, i.e., 80 dB. Besides sunlight, which is the dominant source of ambient light, other sources of ambient light including street lights, oncoming headlamps and tail lamps of other vehicles, and interior light sources within the vehicle itself may contribute to the light being sensed by a specific vehicle sensing system. All of these sources, referred to herein as ambient light sources, may adversely affect the ability of an actively (self) illuminated optical sensing system to accurately and reproducibly perform its functions.

In order to minimize the effects of interference from ambient light, known optical systems endeavour to maximize the number of photons from the emitter that are received by the detector. Further, in order to maximize the reception of photons, known optical systems operate at wavelengths at which atmospheric absorption is minimal. Thus, in keeping with the goal of maximum photon reception, known optical systems do not include any filtering of the light between the system's emitter and detector. However, with no filtering, the light from the emitter may often be overwhelmed by high levels of ambient light. Consequently, the optical system may not be able to discriminate between light emitted by the system and light originating from ambient sources. The consequences of this upon the performance of the overall sensing are serious. In known sensing systems, as ambient lighting conditions vary, information detected by the optical system may vary, even if there is no change in the actual physical state of the features of interest that are being sensed. Consequently, known optical sensing systems may respond in a non-optimum manner to variations in ambient lighting, reducing the utility of such systems.

What is needed in the art is an optical occupant proximity sensor system in which light from the emitter may be reliably sensed by the detector in a wide variety of ambient light conditions.

### SUMMARY OF THE INVENTION

The present invention provides an embodiment of an occupant proximity sensor system including an optical system that limits the wavelength of the light from the emitter to a range of wavelengths that substantially matches a region of the electromagnetic spectrum in which extraneous light sources are weakest, i.e., a region of the electromagnetic spectrum that represents a minimum in the solar spectral irradiance at the surface of the earth. Alternatively, the emitter may emit its full bandwidth of light, while the detector limits the light that it receives from the emitter to the region of the electromagnetic spectrum in which extraneous light sources are weakest. In a further embodiment, the emitter is repetitively flashed on and off so that the baseline ambient light received by the detector may be measured and distinguished from the light that originates from the emitter.

The present invention further provides an embodiment of an occupant or driver eye gaze monitoring system that is substantially impervious to variations in ambient lighting.

The present invention considers three aspects of systems that photometrically sense information based on self-contained photon sources. Three specific concepts are embraced: (1) matching the wavelengths emitted by the photon sources to the wavelengths accepted for detection by the sensor element or array, (2) modulating the photon sources in some manner so as to allow for synchronous detection of photons from the scene being illuminated by the photons, and (3) taking advantage of characteristics of the medium involved to minimize the potential detection of photons originating from other uncontrolled photon sources. A specific implementation relates to the design of imaging systems for use in varying naturally illuminated conditions, wherein the selection of operational wavelengths is made such as to coincide with atmospheric absorption peaks ( ranges of wavelengths in which ambient lighting is relatively low). Conventional practice, in contrast, suggests operating at wavelengths where the intensity of ambient lighting is as high as possible (i.e. atmospheric absorption is minimal).

Specific embodiments of the present invention include bandpass filters for limiting the sensitivity of the image sensor to a subset of the wavelength range of 700 nm to 1100 nm. This subset of wavelength ranges may be chosen to match the wavelengths of specific image sources, or to compensate for (provide attenuation of) competing non-controllable light sources. For example, consider light emitting diodes; an 880 nm LED exhibits a full-width-half-maximum range in emitted wavelengths of approximately 50 nm. Thus, in an imager system that is being actively illuminated by such a light source, a bandpass filter would be applied to the image sensor or image sensor array having bandpass characteristics substantially equal to the characteristics of the light source, in this example, from approximately 850 nm through approximately 900 nm. By limiting the detector's response to this narrow range of wavelengths, we exclude a large proportion of the external light sources that may interfere with the sensor system and that may vary by a factor of 80 dB or more. Consequently, a majority of the light reaching the detector of the sensor/imager system will be light that originated in the active illumination portion of the system, and the total amount of light incident upon the image sensor will vary by substantially less than 80 dB, even though ambient light is varying by 80 dB. This assumes that the output of the active light source is of significant intensity in relation to the intensity of the external light sources in this wavelength range. Ideally, if the active illumination source dominates the external sources in this wavelength range, then there will be relatively little variation in light intensity at the detector, even in the presence of drastic variations in the intensity of the external sources.

According to one embodiment of the invention, an automotive occupant position restraint apparatus senses a position of an occupant of a motor vehicle. An optical energy source emits optical energy that is substantially limited to a first range of wavelengths that corresponds to an atmospheric absorption peak. An optical energy receiver receives the optical energy emitted by the optical energy source after the optical energy has been reflected within a passenger compartment of the motor vehicle. A range of wavelengths that the receiver is operable to receive is substantially limited to a second range of wavelengths that corresponds to the atmospheric absorption peak.

According to another embodiment of the present invention, an automotive optical sensing system includes an optical energy source emitting optical energy toward an object. An optical energy receiver receives the optical energy emitted by the optical energy source after the optical energy has been reflected by the object. A range of wavelengths that the receiver is operable to receive is substantially limited to a first range of wavelengths that corresponds to an atmospheric absorption peak.

According to yet another embodiment of the present invention, an automotive optical sensing system includes an optical energy source emitting optical energy toward an object. An optical energy receiver receives the optical energy emitted by the optical energy source after the optical energy has been reflected by the object. Two distinct ranges of wavelengths that the receiver is operable to receive include a first range of wavelengths that corresponds to an atmospheric absorption peak, and a second range of wavelengths that are close to the wavelengths of the first range of wavelengths, but are representative of the solar spectrum not in the presence of an absorption peak. The differential detection of these distinct sets of wavelengths providing additional ability to discriminate against the influence of ambient light.

An advantage of the present invention is that the interference of ambient light with the detection or sensing of light originating from the emitter is reduced.

Another advantage is that inexpensive silicon-based light detectors may be used.

Yet another advantage is that the baseline ambient light received by the detector may be measured and distinguished from the light that originates from the emitter.

It is understood that although the specific embodiments presented in this document refer to occupants of automobiles, identical systems may be of advantage in other vehicular systems, including trucks, busses and other forms of transportation in which it is desirable to identify the state of occupants.

Similarly, advantageous use may be made of these concepts for other optical emitter/detector systems that may operate in the presence of large variations in ambient illumination.

### BRIEF DESCRIPTION OF THE DRAWINGS

The present invention will now be described, by way of example, with reference to the accompanying drawings, in which:
FIG. 1 is a cut-away, side elevational view of a vehicle, with an occupant seated therein, and with the position of the occupant being determined by the automotive occupant position restraint system of the present invention.
FIG. 2 is a schematic block diagram of one embodiment of the automotive occupant position restraint system of the present invention.
FIG. 3 is a cut-away, side elevational view of a vehicle, with a child seated in a rear facing infant seat, and indicating the consequences of having an air bag deployed in this situation.
FIG. 4 is a cut-away, side elevational view of a vehicle, with an occupant seated such that the occupant is partially within the at-risk zone.
FIG. 5 is a plot of the solar spectral irradiance on earth as a function of wavelength.
FIG. 6 is three superimposed plots of detector sensitivity, emitter output, and atmospheric transmittance, respectively, as a function of wavelength for the optical occupant proximity sensor system of FIG. 2.
FIG. 7 is a cut-away, side elevational view of a vehicle, with an occupant seated therein, and with the gaze of the occupant being monitored by the driver alertness monitoring system of the present invention.

Corresponding reference characters indicate corresponding parts throughout the several views. Although the drawings represent an embodiment of the present invention, the drawings are not necessarily to scale and certain features may be exaggerated in order to better illustrate and explain the present invention. The exemplifications set out herein illustrate an embodiment of the invention and such exemplifications are not to be construed as limiting the scope of the invention in any manner.

### DESCRIPTION OF THE PREFERRED EMBODIMENTS

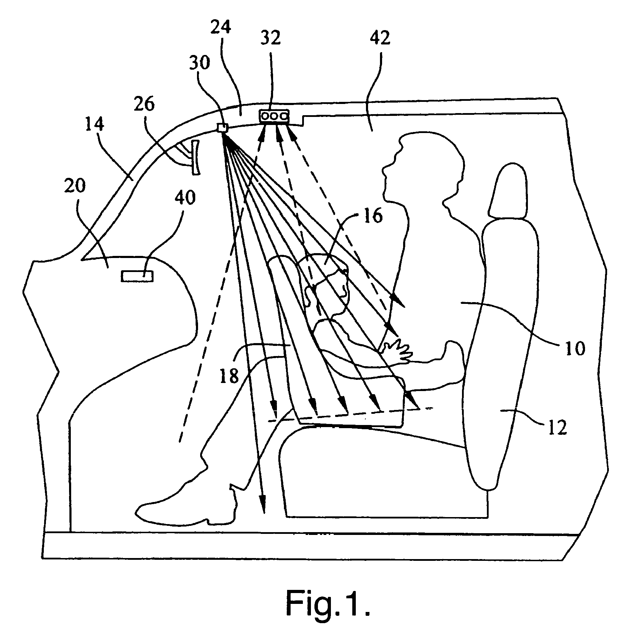

Referring now to the drawings, and particularly to FIG. 1, there is shown a person 10 seated on the front-outboard seat 12 of a vehicle 14. As shown, person 10 is properly seated on seat 12, with his hips and back placed against the back of the seat, and with the seat set at a safe distance spaced from dashboard 20 of vehicle 14. Also illustrated on FIG. 1 is an alternative arrangement in which an infant 16 is seated in a rear facing infant seat 18, clearly within the at-risk zone.

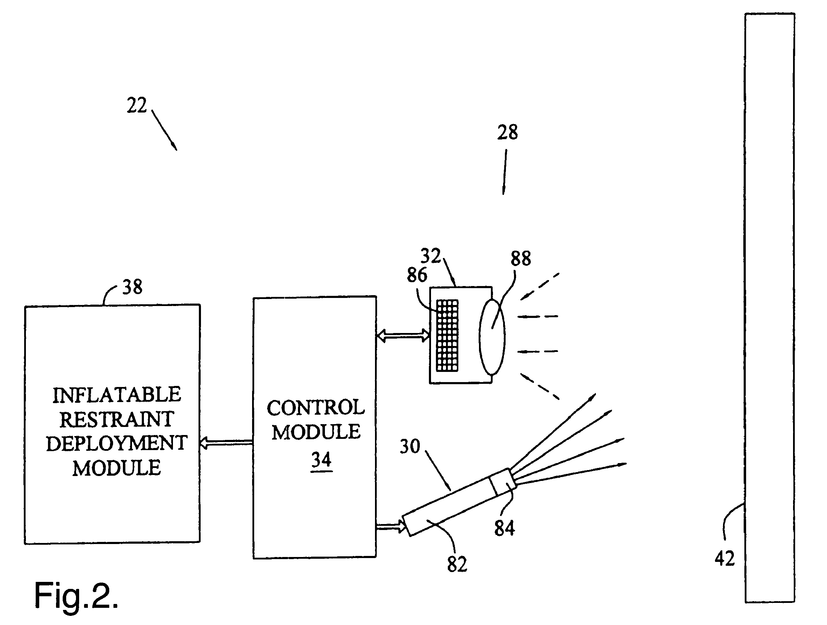

Mounted in a console 24 behind a rear view mirror 26 in vehicle 14 is an optical occupant proximity sensor system 28 (FIG. 2) including an emitter module 30 and a light detector module 32. Emitter module 30 emits optical energy in the form of infrared (IR) or near infrared (NIR) radiation. Active near infrared illuminations have the advantages of being non-intrusive to the occupants and, at the same time, providing enough sensitivity for typical silicon based receivers.

Detector module 32 receives optical energy in the form of IR or NIR radiation or light after it has been scattered or otherwise reflected by objects in the front of the passenger compartment of the vehicle. Detector module 32 may also receive diffused light, i.e., light that has not been reflected by objects in the passenger compartment. Ideally, detector module would receive only light originating from emitter module 30. In practice, however, detector module 32 also receives light from extraneous sources such as the sun. After detector module 32 receives the light, the system may recognize occupant type, as well as occupant position and posture, with dynamic occupant position being determined using triangulation, as is well known in the art.

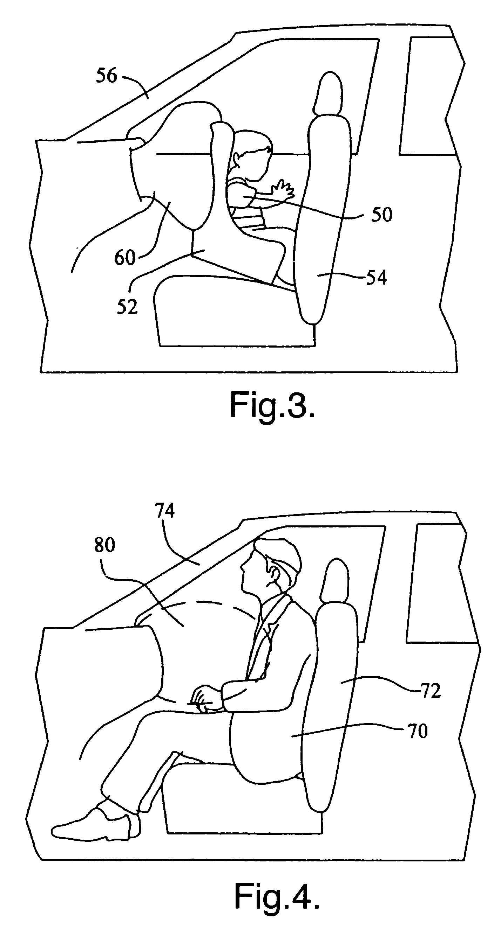

FIG. 2 is a schematic block diagram of an automotive occupant position restraint system 22 of the present invention, of which modules 30, 32 of FIG. 1 are a part. System 22 also may include a control module 34 and an inflatable restraint deployment module 38. Control module 34 is in communication with each of modules 30, 32 and 38. An algorithm within control module 34 uses the light data from detector module 32 to decide whether the inflatable restraint, i.e., air bag 60 (FIG. 3), should be allowed to deploy in the event of the vehicle being involved in a collision. After making this decision, control module 34 may send a signal indicative of the decision to inflatable restraint deployment module 38.

Modules 30 and 32 are electrically connected to control module 34 which classifies person 10 in passenger compartment 42 and determines if the person is out of the at-risk zone and is not seated in a rear facing infant seat. In this case, person 10 is safely seated and, accordingly, control system 34 will enable the air bag (not shown in FIG. 1) associated with the front-outboard seat, so that the air bag may be deployed in case an accident occurs. Control module 34 may also cause display 40 to provide an indication that the air bag is enabled. As noted above, if display 40 should indicate that the air bag is suppressed, then person 10 or the driver of vehicle 14 would have the opportunity to take corrective measures.

FIG. 3 illustrates the consequences of failure to disable an air bag when the air bag is used with a child seated in a rear facing infant seat. Here, a child 50 is seated in a rear facing infant seat 52 that is attached to the front-outboard seat 54 of a vehicle 56. In this case, deployment of air bag 60 has not been suppressed and the air bag has deployed against rear facing infant seat 52, forcing the rear facing infant seat rearward. It will be appreciated that such an action may cause serious injury or death to child 50 and, in fact, there have been reported instances of such injury or death.

FIG. 4 illustrates the potential consequences of a person disposed within the at-risk zone. Here, a person 70 is seated on a front-outboard seat 72 in a vehicle 74. Person 70 is properly seated on seat 72, with his hips and back against the back of the seat; however, in this case, the seat has been moved too far forward, thus placing part of the body of the person within at risk-zone 80. Thus, in this case, deployment of an air bag, such as air bag 60 (FIG. 3) has the potential of causing serious injury or death to the person and again, in fact, there have been reported instances of such injury or death. Proper operation of restraint system 22 will suppress deployment of the air bag and will alert person 70 and the driver of vehicle 74 to the potential hazard. In this case, person 70 could simply move seat 72 rearwardly to place himself outside of at-risk zone 80. The position sensing system would then enable the air bag, and display 40 (FIG. 1) would indicate enablement of the air bag.

The novel emitter module 30 of the present invention will now be described in more detail. Emitter module 30 includes an optical energy source 82, which may be in the form of a light-emitting diode (LED) or laser source. LED 82 transmits light through a filtering element 84 (FIG. 2) that is disposed in a path of the light from LED 82. Rather than a single LED, emitter module 30 may include a plurality of LEDs, a laser diode, some other form of laser, an incandescent light source, or a thermal light source, for example.

In one embodiment, LED 82 emits near infrared light, and filtering element 84 is a bandpass filter. The band of wavelengths passed by a bandpass filter 84 may correspond to and/or overlap a band of wavelengths that is absorbed by water vapor in the earth's atmosphere more than are other nearby and comparable wavelengths. Since earth's atmosphere absorbs a high level of the sun's radiation in such a band of wavelengths, interference of sunlight with the light from LED 82 may be reduced. In contrast, since the light from LED 82 travels only a few meters in its path to detector module 32, a negligible amount of the light from LED 82 is absorbed by the atmosphere. Accordingly, emitter module 30 may include any type of light source that is suitably filtered to limit the emitted optical energy to a range of wavelengths that corresponds to and/or overlaps wavelengths associated with an atmospheric absorption peak and in which extraneous light sources are relatively weak.

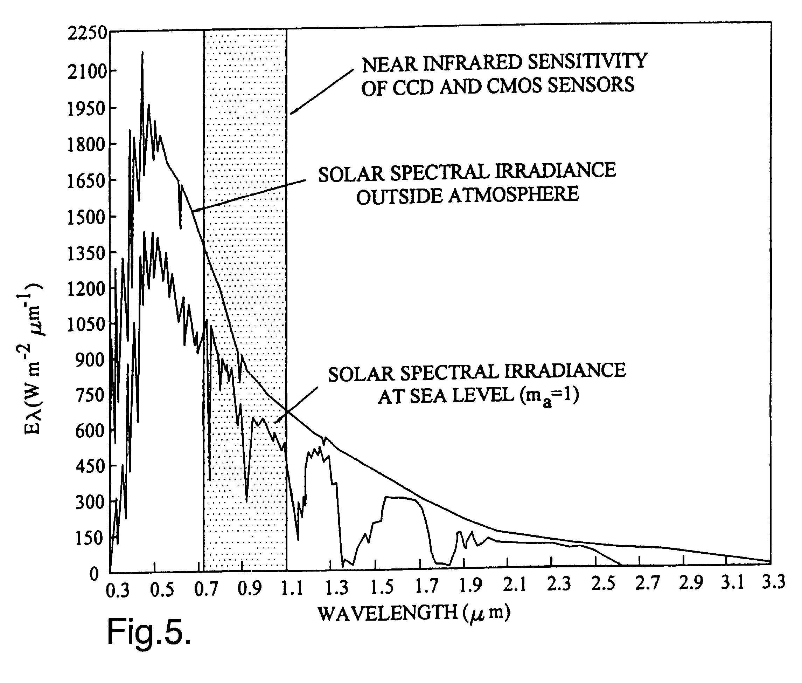

The spectral irradiance of the sun at the surface of the earth is shown in FIG. 5 as a function of wavelength (Reference: The Infrared & Electro-Optical Systems Handbook, Volume 1, G.J. Zissis, ed., SPIE Press, 1993, Figure 3.5, pg. 155). It should be noted that there are several absorption peaks, within which the irradiance of the sun, as determined after passage through the atmosphere, is significantly reduced with respect to that at nearby wavelengths. An absorption peak is the wavelength or frequency at which a particular substance, such as water vapor in the atmosphere, absorbs the most power, i.e., the attenuation of the propagated signal is the greatest, when the substance is bombarded with light waves. Operating the actively-illuminated optical sensor system 28 in wavelength ranges that correspond to these absorption peaks results in a reduced influence of solar irradiance upon sensor system 28. Thus, operating sensor system 28 in such a wavelength range or band improves the sensitivity of detector module 32 to light from emitter module 30.

Although several absorption peaks are present in the solar irradiance spectrum, as shown in FIG. 5, of particular interest are those that lie within the wavelength range that may be sensed by relatively inexpensive silicon-based detectors, i.e., that is, those absorption peaks that lie approximately between 700 nm and 1100 nm. Such silicon-based detectors may be used in detector module 32, and may be in the form of charge coupled device (CCD) imager arrays and CMOS imager arrays, for example.

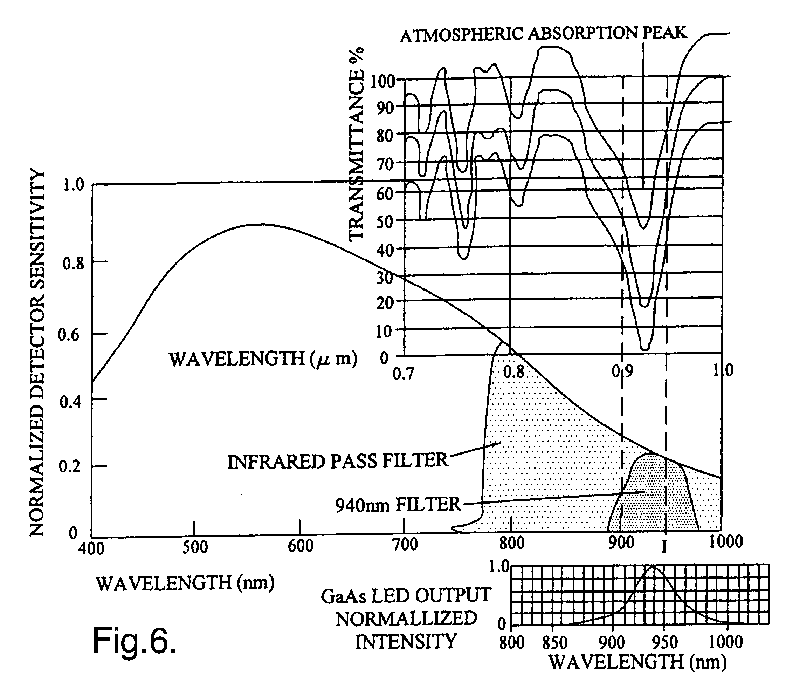

Although two distinct absorption peaks lie in the preferred range of wavelengths as described in the preceding paragraph, it will be understood, as a result of the present invention, that a preferable choice of wavelengths will involve the absorption peak at approximately 930 nm, and will not involve the absorption peak at approximately 750 nm. One skilled in the art of optical sensing in the near infrared wavelength portion of the spectrum will understand that the sensitivity of silicon based detectors will generally decrease with increasing wavelength, as shown in Figure 6, thus favoring the use of shorter wavelengths for any form of optical sensing. However, it will be understood through the present invention that the ability to make use of the absorption peak ambient minimum to improve system performance will be associated with the ability to provide active illumination at a corresponding wavelength or wavelengths, and the ability to filter a detector in a manner so as to detect substantially only that wavelength or wavelengths. Further, it will generally appreciated by those skilled in the art of optical sources and detectors that the sharpness of the absorption peak at approximately 750 nm would require comparable sharpness in both the optical emission spectrum of an active illumination source and the optical filtering of a detector. In the case of the absorption peak at approximately 750 nm, it is this requirement for very narrow wavelength distributions of optical emission and detection that make the operation of a sensing system using this absorption peak impractical, as compared with the use of the broader absorption peak at approximately 930 nm, even given that the sensitivity of the optical detector is reduced at the longer wavelengths.

The absorption peaks at longer wavelengths such as approximately 1140 nm, 1400 nm, 1800 nm, and 2800 nm are also of interest in the context described in this invention. Although the infrared sources and detectors that operate at these wavelengths are more expensive than the emitters and silicon based detectors that operate at wavelengths below 1100 nm, there is less solar radiation in these regions, resulting in less interference from ambient lighting, even at lower levels of active system illumination. Consequently, it will be understood that this invention describes actively illuminated optical systems that operate at these wavelengths, just as described in the case of operation at 930 nm. However, it will be understood that given the present development of optical emitters and detectors for all of the wavelengths described in this document, the economical preference may lie with the wavelengths from 700 nm through 1100 nm.

FIG. 6 includes a plot of the normalized sensitivity of a silicon-based detector, such as a Kodak KAC-0310 CMOS imager, as a function of wavelength. Although the sensitivity of the detector peaks between 500 nm and 600 nm, the detector has ample sensitivity in the infrared range that is approximately between 700 nm and 1100 nm.

It can be seen in FIG. 5 that there are several discrete wavelengths within the range between 700 nm and 1100 nm in which the atmospheric transmission of light is significantly reduced, such as due to absorption by water molecules. For example, atmospheric transmission of light is at a relative minimum for wavelengths in the vicinity of 930 nm. Thus, external light sources such as the sun offer reduced competition to an emitter module 30 operating at a wavelength centered at approximately 930 nm. In particular, both the sun and any other light sources are attenuated around 930 nm by atmospheric absorption. Thus, the benefits derived from setting the operating point of optical system 28 at a local peak in atmospheric absorption apply to all potentially interfering light sources. Similar considerations apply at 1050 nm, 1400 nm, 1800 nm, and 2800 nm. At such longer wavelengths, the spectral width of the bandpass filter may be correspondingly larger, consistent generally with the spectral width of the emission source and the spectral width of the specific atmospheric absorption peak that is being relied upon for attenuating solar radiation.

In order to set the operating point of optical system 28 to correspond with the atmospheric absorption peak at 930 nm, filtering element 84 may be in the form of a bandpass filter having a range or pass band approximately centered at 930 nm. For example, the pass band of bandpass filter 84 may be approximately between 890 nm and 980 nm, as indicated in FIG. 6 by the shaded area that is labelled "940 nm filter". Thus, the width of the pass band may be approximately 90 nm. In preferred embodiments, the width of the pass band may be less than approximately 100 nm in order to roughly correspond to widths of atmospheric absorption peaks. A variety of band pass filters may apply. For instance one preferred filter has a peak at 960 nm and a width of 75 nm. The band width of the filter ideally should match the width of the emission of the optical emission source so as to assure that the majority of light emitted by the emitter may be detected by the detector.

Other effects need to be considered as well when determining the optical properties of the detector filter means. This filter allows for the thermal drift of emissive sources such as light emitting diodes and laser diodes, among others. Such a drift tends to be towards increasing wavelengths as temperatures increase typically 0.2 nm /degree Kelvin of temperature rise of the diode substrate) and may total approximately 20 nm. By contrast, the interference filters that typically comprise bandpass filters have a strong performance variation with angle of incidence. Ideally, light will be incident upon such an interference filter at normal incidence (zero degrees), but in a real optical system, significantly larger angles of incidence may be involved. Reasonable numbers may be a decrease in the passband wavelengths of as much as 30 nm for light incident at 30 degrees with respect to the surface normal. A consequence of this is that it is necessary to allow for both of these influences (thermal drift to longer wavelengths, angle of incidence based shift to shorter wavelengths) in order to define the optimum band-pass characteristics for the detector filter described in this work. A reasonable choice of such an optimum filter would be the filter described above having a center wavelength of 960 nm and a bandpass of 75 nm. Although this is wider than the width of the atmosphere absorption peak, it represents a good choice in terms of the effects identified above.

Similarly, detector module 32 may be provided with an optical energy receiver or light detector in the form of a silicon-based light detector or imager array 86. Detector module 32 may also be provided with a filtering element 88 that limits the received optical energy to a range of wavelengths that corresponds to and/or overlaps wavelengths associated with an atmospheric absorption peak and in which extraneous light sources are relatively weak. Although the range of wavelengths passed by filtering element 88 may overlap the range of wavelengths emitted by emitter module 30, it is not necessary for the two ranges to be identical.

Filtering element 88 may be in the form of a bandpass filter having a range or pass band approximately centered at 930 nm. For example, the pass band of bandpass filter 88 may also be approximately between 890 nm and 980 nm and may also have a width of less than approximately 200 nm. However, it is to be understood that the pass band of either filter 84 or filter 88 may be significantly larger or smaller than the 890 nm to 980 nm pass band that is illustrated. For example, it is possible for the pass band of filter 84 and/or filter 88 to include all infrared wavelengths, as indicated by the shaded area that is labelled "infrared pass filter". It is possible for the light detector 86 to be any type of light detector, such as a single point sensor, or an array of sensors, for example.

Either or both of filters 84, 88 may have a quite narrow pass band, with a width of 20-30 nm or less. With such a narrow pass band, the amount of light that reaches detector module 32 may become quite small. In order to compensate for this decreased amount of light, the detector module 32 may be provided with an increased level of sensitivity. For example, the detection integration time and/or the gain of imager array 86 may be increased to an appropriate level.

In an alternative embodiment, LED 82 is a gallium arsenide (GaAs) LED which has a peak emission intensity and efficiency at a wavelength of approximately 940 nm. A plot of the normalized intensity of a Fairchild GaAs LED as a function of wavelength is included in FIG. 6. Thus, the range of wavelengths of the LED's peak intensity corresponds with the atmospheric absorption peak illustrated in the plot of transmittance versus wavelength that is also included in FIG. 6. It is possible to not include a filtering element, such as filter 88, in an emitter module in which the light source has an increased intensity in a desired range of wavelengths, such as is the case with a GaAs LED.

In another alternative embodiment, although the emitter module includes a light source that emits light in a wide band of frequencies and wavelengths, the emitter module does not include any type of filtering element. In this embodiment, the filtering element in the detector module is relied upon to substantially limit the detected wavelengths to desired ranges or bands. More specifically, the filtering element in the detector module may be centered around the wavelength of 930 nm in order to match a relative minimum in the spectral irradiance at the surface of the earth.

In yet another alternative embodiment, the light emitter is modulated or switched on and off so as to allow for synchronous detection of reflected or scattered photons from the objects being illuminated. For example, active illumination may be provided during only alternate imager frames, thereby allowing the control module to perform differential sensing of information that results from the active illumination source. That is, the light source is only active during alternate image capture frames. The control module may switch the light source on and off, and analyze light signals received by the detector module while the light source is on. The analysis of these light signals may be performed dependent upon light signals received by the detector module while the optical energy source is off. For example, light signals received while the optical energy source is off represent extraneous light sources. The effects of extraneous light sources may be separated and removed from the light signals that are received while the light source is on. Any image content due to unattenuated (or attenuated) light sources that are not being switched on and off in this pattern may be (further) attenuated, thereby providing additional robustness in the determination of image content that is being illuminated by the active illumination light source. Thus, the influence of extraneous light sources is further suppressed.

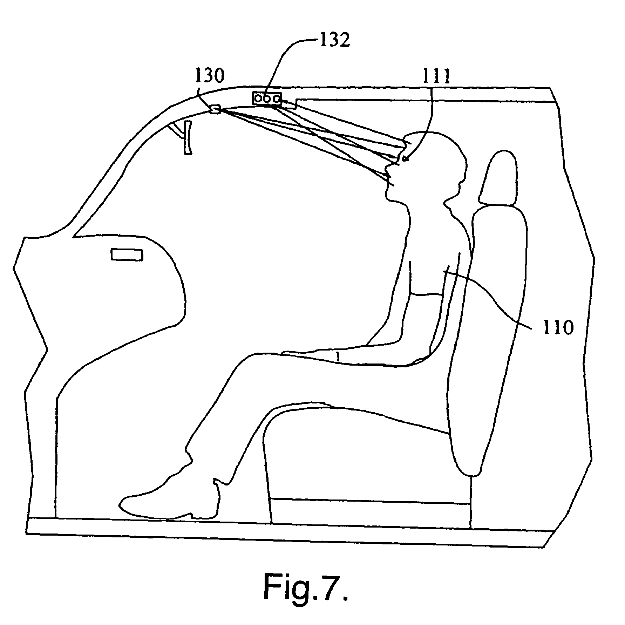

Another embodiment relates to a vehicle sensing system that is designed to monitor the degree to which a vehicle occupant's eye or eyes are open. Such a sensing system has also been described as a driver gaze monitor system. As shown in FIG. 7, a driver alertness monitoring system includes an emitter module 130 directing optical energy toward eyes 111 of an occupant 110. A detector module 132 receives the optical energy after it has been scattered or otherwise reflected by the face and eyes 111 of occupant 110. Such a system may monitor the percentage of time that the eye or eyes of a vehicle occupant (in many cases, this may be the driver of the vehicle) are open. The degree to which the occupant's eyes remain open has been documented to be a direct indicator of the person state of awareness and fitness to perform complex functions, such as the driving of an automobile or other vehicle. Such systems may employ an illumination source that is not visible to the occupant, but is readily detectable by relatively low cost sensors. In most cases, this means that the illumination source is in the near infrared portion of the spectrum from 700 nm through 1100 nm, comprising wavelengths that are detectible by silicon based sensors.

Emitter module 130 and detector module 132 are shown in FIG. 7 as being disposed in an overhead console of the vehicle. However, it is to be understood that one or both of emitter module 130 and detector module 132 may be disposed in the dashboard of the vehicle.

It is a goal of such sensing systems to provide consistent performance regardless of the time of day or night. Consequently, it is desirable to choose optical emitting means and optical detecting means that provide substantially consistent, reproducible detection performance even in the presence of very large changes in ambient lighting, such as the variations in sun light during a twenty-four hour period. In order to limit the susceptibility of the system to variations in ambient lighting, it is generally necessary to, in some manner, overpower the ambient light sources in a wavelength range of interest. It is to be observed from FIG. 6 that the intensity of solar radiation is continuously reduced at increasing wavelengths, consistent with the manner in which the radiation is produced. Further, from FIG. 6, it is observed that in certain relatively small portions of the spectrum additional dramatic reductions in the intensity of sun light, as detected at or near the surface of the earth, may occur due to the absorption of those wavelengths by components of the earth's atmosphere, such as, for instance, water vapor. Consequently, the present invention suggests that operation of the optical emitting means and optical detecting means of said vehicle driver gaze sensing system at wavelengths that substantially correspond to the wavelengths of one or more of these spectral regions of relatively high absorption will enable said system to respond predominantly to variations in the geometry of the optical system, and to generally not respond to variations in ambient lighting. Equivalently, operation of the sensing system in said wavelength bands will enable the light emitted by said system to dominate over light produced by all other interfering light sources, which in turn will allow said system to operate in a well defined, consistent, reproducible manner even in the presence of variations in the intensity of other light sources that may be present.

A specific embodiment of such an optical system for monitoring the degree to which a vehicle occupant's eye or eyes are open may operate in a range of wavelengths including the wavelengths between 930 nm and 940 nm, as shown in FIG. 6. These wavelengths represent wavelengths of light that are substantially absorbed by components of the earth's atmosphere. Consequently, light of these wavelengths that travels long distances through the earth's atmosphere will be preferentially absorbed by the atmosphere, resulting in a significant decrease in the intensity of light that may be detected by a detector means of said system. A further embodiment of said system is that the light emitting means of said system may also be made to emit a significant amount of light in the wavelength range between 930 nm and 940 nm. Since the physical extent of said optical system is small compared with the physical extent of the path that light must travel from the sun through the earth's atmosphere to the detector means of said system, the enhanced absorption of light of this preferred range of wavelengths will not significantly reduce the amount of light detected by said detection means that is emitted by said optical emitter means. Consequently, said optical system will operate in a manner such that the optical emitter means may provide the majority of light that is detected by the system detector means, and consequently all variations in solar related illumination will not serve to significantly vary the illumination detected by said optical detector means. It is understood that other ambient illumination sources may exist that are not so physically remote from the detection means so as to be significantly degraded in intensity prior to arrival at said detector. However, these sources will all have significantly lower intensity than the sun, and since said detector means has been designed to detect only substantially the wavelength range including the wavelengths from 930 nm through 940 nm, variations in the intensity of these other ambient light sources will also not provide significant interference in the performance of said system. Consequently, again, the dominant lighting source that is detected by said detector means will be the emitter that is a component of said system. As a result, the performance of said sensing system will be consistent and reproducible, and predominantly independent of variations in all other lighting sources.

Further embodiments, such as have been suggested with regard to the occupant position sensing application described previously will be seen to apply with equal value to the driver gaze embodiment described in the immediately previous paragraph.

In yet another aspect of this embodiment, it is known that the light emitter may be modulated or switched on and off so as to allow for synchronous detection of reflected or scattered photons from the objects being illuminated. For example, active illumination may be provided during only alternate imager frames, thereby allowing the control module to perform differential sensing of information that results from the active illumination source. That is, the light source is only active during alternate image capture frames. The control module may switch the light source on and off, and analyze light signals received by the detector module while the light source is on. The analysis of these light signals may be performed dependent upon light signals received by the detector module while the optical energy source is off. For example, light signals received while the optical energy source is off represent extraneous light sources. The effects of extraneous light sources may be separated and removed from the light signals that are received while the light source is on. Any image content due to unattenuated (or attenuated) light sources that are not being switched on and off in this pattern may be (further) attenuated, thereby providing additional robustness in the determination of image content that is being illuminated by the active illumination light source. Thus, the influence of extraneous light sources is further suppressed.

It shall be apparent that alternative embodiments of this technique may be applied in other sensing systems. For example, the operation of sensing systems external to the shell of a vehicle may also benefit from these improvements. Such sensing systems that may advantageously benefit from operating at a near infrared wavelength range in which the effects of ambient illumination may be minimized or illuminated include, but are not limited to, lane tracking systems, collision avoidance systems, road obstacle detection systems, pre-crash sensing systems, blind spot detection systems, and backup warning systems. Many of these systems have been implemented using conventional illumination means, but their performance is not completely independent of variations in ambient illumination. Consequently, operating such systems according to the concepts described in the previous embodiments will result in improvements in system reliability and reproducibility of performance. In these cases, the effect of ambient light may be larger, due to the need to transmit and receive light across larger distances. However, these cases also involve the opportunity to use emitting light sources of higher intensity. Higher intensity light sources may comprise larger numbers of LEDs (for example 940 nm GaAs LEDs and/or others). Examples of such light sources may also include incandescent and halogen lamps that incorporate suitable filters to direct a limited spectral distribution of light (as of the wavelengths including the range of wavelengths from 930 nm through 940 nm) in specific directions, for example, in the pattern conventionally known as the "high beam" pattern of vehicle headlamps. Similar filtering may be applied to other broad band illumination sources. Narrow band illumination sources, including forms of lasers such as, but not limited to laser diodes, may also be advantageously applied in such applications.

It is to be understood that the present invention may be advantageously applied in other portions of the spectrum, such as at longer wavelengths in the infrared range, in order to reduce the effect of extraneous and uncontrollable illumination sources. In preferred embodiments, both the active illumination source and the detector are suitably constrained to limit the range of wavelengths that may be emitted or detected, and the operating wavelengths are chosen so as to reduce the influence of extraneous, uncontrollable illumination sources. For example, as can be seen in FIG. 5, suitable atmospheric absorption peaks occur in the vicinity of wavelengths of 1050 nm, 1400 nm, 1800 nm, and 2800 nm. It is to be noted that operation at some of these longer wavelengths will also enable the use of less restrictive (wider pass band) bandpass filters.

The embodiments disclosed above are not intended to be exhaustive or to limit the invention to the precise forms disclosed in the detailed description. Rather, the embodiments have been chosen and described so that others skilled in the art may utilize their teachings.

Although described in the exemplary embodiments, it will be understood that various modifications may be made to the subject matter without departing from the intended and proper scope of the invention. That is, the optical sensing system of the present invention may be used in automotive applications other than an automotive supplemental restraint system, as described in the above embodiments. For example, the optical sensing system of the present invention may be used in active night vision systems, lane tracking systems, systems that monitor the direction of a driver's gaze, and/or systems that monitor the frequency of a driver's blinking in order to detect when the driver is falling asleep. Further, one of skill in the art can appreciate that the optical sensing system of the present invention may also be used in many non-automotive optical sensing applications.

## Claims

1. An apparatus for producing and detecting a pattern of light projected some distance to illuminate objects or features that may reflect or scatter said light back to said apparatus, comprising:
an optical energy source configured to emit optical energy that is substantially limited to a first range of wavelengths that correspond to a range of wavelengths that are substantially absorbed by the atmosphere of the earth in preference to nearby adjacent wavelengths; and
an optical energy receiver configured to receive the optical energy emitted by said optical energy source after the optical energy has been reflected or scattered from the objects or features within the illuminated pattern of said apparatus such that the range of wavelengths that said receiver is operable to receive is substantially limited to a second range of wavelengths that corresponds to the said range of wavelengths that are substantially absorbed by the atmosphere of the earth in preference to nearby adjacent wavelengths.

2. The apparatus described in claim 1 wherein the detected signals are substantially independent of variations in ambient illumination.

3. The apparatus of claim 1, wherein the first range of wavelengths is approximately equal to the second range of wavelengths.

4. The apparatus of claim 1, wherein said optical energy source includes one or more light emitting diodes.

5. The apparatus of claim 1, wherein said optical energy source includes a bandpass filter configured to pass a range of wavelengths including a wavelength of 930 nm.

6. The apparatus of claim 1, wherein said optical energy source includes a laser source.

7. The apparatus of claim 1, wherein said optical energy receiver includes a silicon-based light detector and a bandpass filter.

8. The apparatus of claim 7, wherein said bandpass filter is configured to pass a range of wavelengths including a wavelength of 930 nm.

9. The apparatus of claim 7, wherein a pass band of said bandpass filter has a width of less than approximately 100 nm.

10. A vehicle system apparatus for monitoring a state of alertness of a vehicle occupant, said apparatus comprising:
an optical energy source configured to emit optical energy that is substantially limited to a first range of wavelengths that correspond to a range of wavelengths that are substantially absorbed by the atmosphere of the earth in preference to nearby adjacent wavelengths; and
an optical energy receiver configured to receive the optical energy emitted by said optical energy source after the optical energy has been reflected from the eye or eyes of said occupant of said vehicle, a range of wavelengths that said receiver is operable to receive being substantially limited to a second range of wavelengths that corresponds to the said first range of wavelengths.

11. The apparatus of claim 10, wherein the first range of wavelengths is approximately equal to the second range of wavelengths.

12. The apparatus of claim 10, wherein said optical energy source includes one or more light emitting diodes.

13. The apparatus of claim 10, wherein said optical energy source includes a bandpass filter configured to pass a range of wavelengths including a wavelength of 930 nm.

14. The apparatus of claim 10, wherein said optical energy source includes a GaAs light emitting diode.

15. The apparatus of claim 10, wherein said optical energy source includes a laser source.

16. The apparatus of claim 10, wherein said optical energy receiver includes a silicon-based light detector and a bandpass filter.

17. The apparatus of claim 16, wherein said bandpass filter is configured to pass a range of wavelengths including a wavelength of 930 nm.

18. The apparatus of claim 16, wherein a pass band of said bandpass filter has a width of less than approximately 100 nm.

19. The apparatus of claim 16, wherein said bandpass filter is configured to pass a range of wavelengths substantially including the wavelengths from 930 through 940 nm.

20. An automotive occupant position restraint apparatus for sensing a position of an occupant of a motor vehicle, said apparatus comprising:
an optical energy source configured to emit optical energy that is substantially limited to a first range of wavelengths that corresponds to an atmospheric absorption peak; and
an optical energy receiver configured to receive the optical energy emitted by said optical energy source after the optical energy has been reflected within a passenger compartment of the motor vehicle, a range of wavelengths that said receiver is operable to receive being substantially limited to a second range of wavelengths that corresponds to the atmospheric absorption peak.

21. The apparatus of claim 20, wherein the first range of wavelengths is approximately equal to the second range of wavelengths.

22. The apparatus of claim 20, wherein said optical energy source includes a GaAs light emitting diode.

23. The apparatus of claim 20, wherein said optical energy source includes a bandpass filter configured to pass a range of wavelengths including a wavelength of 930 nm.

24. The apparatus of claim 20, wherein said optical energy source includes a laser source.

25. The apparatus of claim 20, wherein said optical energy receiver includes a silicon-based light detector and a bandpass filter.

26. The apparatus of claim 25, wherein said bandpass filter is configured to pass a range of wavelengths including a wavelength of 930 nm.

27. The apparatus of claim 26, wherein a pass band of said bandpass filter has a width of less than approximately 100 nm.

28. The apparatus of claim 20, further comprising a control module in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.

29. An automotive optical sensing system comprising:
an optical energy source configured to emit optical energy toward an object, the optical energy being limited to a first range of wavelengths that corresponds to an atmospheric absorption peak; and
an optical energy receiver configured to receive the optical energy emitted by said optical energy source after the optical energy has been reflected by the object, a range of wavelengths that said receiver is operable to receive being substantially limited to a second range of wavelengths that corresponds to the atmospheric absorption peak.

30. The system of claim 29, wherein the range of wavelengths that said optical energy receiver is operable to receive includes one of 930 nm, 1140 nm, 1400 nm, 1800 nm and 2800 nm.

31. The system of claim 29, wherein said optical energy receiver includes a silicon-based light detector and a bandpass filter.

32. The system of claim 31, wherein a pass band of said bandpass filter has a width of less than approximately 200 nm.

33. The system of claim 29, further comprising a control module in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.

34. An automotive optical sensing system comprising:
an optical energy source configured to emit optical energy toward an object; and
an optical energy receiver configured to receive the optical energy emitted by said optical energy source after the optical energy has been reflected by the object, a range of wavelengths that said receiver is operable to receive being substantially limited to a first range of wavelengths that corresponds to an atmospheric absorption peak.

35. The system of claim 34 wherein said optical energy source is configured to emit optical energy that is substantially limited to a second range of wavelengths that corresponds to the atmospheric absorption peak.

36. The system of claim 35, wherein the first range of wavelengths is approximately equal to the second range of wavelengths.

37. The system of claim 34, wherein said optical energy source includes a light emitting diode and a bandpass filter.

38. The system of claim 37, wherein said bandpass filter is configured to pass a range of wavelengths including a wavelength of 930 nm.

39. The system of claim 34, wherein said optical energy source includes a GaAs light emitting diode.

40. The system of claim 34, wherein said optical energy receiver includes a silicon-based light detector and a bandpass filter.

41. The system of claim 40, wherein said bandpass filter is configured to pass a range of wavelengths including a wavelength of 930 nm.

42. The system of claim 41, wherein a pass band of said bandpass filter has a width of less than approximately 200 nm.

43. The system of claim 34, further comprising a control module in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.

44. apparatus (22) for producing and detecting a pattern of light projected some distance to illuminate objects or features (10, 12, 16, 18) that may reflect or scatter said light back to said apparatus, comprising:
an optical energy source (30) configured to emit optical energy that is substantially limited to a first range of wavelengths that correspond to a range of wavelengths that are substantially absorbed by the atmosphere of the earth in preference to nearby adjacent wavelengths; and
an optical energy receiver (32) configured to receive the optical energy emitted by said optical energy source after the optical energy has been reflected or scattered from the objects or features within the illuminated pattern of said apparatus such that the range of wavelengths that said receiver is operable to receive is substantially limited to a second range of wavelengths that corresponds to the said range of wavelengths that are substantially absorbed by the atmosphere of the earth in preference to nearby adjacent wavelengths.

45. The apparatus described in claim 1 wherein the detected signals are substantially independent of variations in ambient illumination.

46. The apparatus of claim 1, wherein the first range of wavelengths is approximately equal to the second range of wavelengths.

47. The apparatus of claim 1, wherein said optical energy source includes one or more light emitting diodes (82).

48. The apparatus of claim 1, wherein said optical energy source includes a bandpass filter (84) configured to pass a range of wavelengths including a wavelength of 930 nm.

49. The apparatus of claim 1, wherein said optical energy source includes a laser source (82).

50. The apparatus of claim 1, wherein said optical energy receiver includes a silicon-based light detector (86) and a bandpass filter (88).

51. The apparatus of claim 7, wherein said bandpass filter is configured to pass a range of wavelengths including a wavelength of 930 nm.

52. The apparatus of claim 7, wherein a pass band of said bandpass filter has a width of less than approximately 100 nm.

53. A vehicle system apparatus (22) for monitoring a state of alertness of a vehicle (14) occupant (110), said apparatus comprising:
an optical energy source (130) configured to emit optical energy that is substantially limited to a first range of wavelengths that correspond to a range of wavelengths that are substantially absorbed by the atmosphere of the earth in preference to nearby adjacent wavelengths; and
an optical energy receiver (132) configured to receive the optical energy emitted by said optical energy source after the optical energy has been reflected from the eye or eyes (111) of said occupant of said vehicle, a range of wavelengths that said receiver is operable to receive being substantially limited to a second range of wavelengths that corresponds to the said first range of wavelengths.

54. The apparatus of claim 10, wherein the first range of wavelengths is approximately equal to the second range of wavelengths.

55. The apparatus of claim 10, wherein said optical energy source includes one or more light emitting diodes (82).

56. The apparatus of claim 10, wherein said optical energy source includes a bandpass filter (84) configured to pass a range of wavelengths including a wavelength of 930 nm.

57. The apparatus of claim 10, wherein said optical energy source includes a GaAs light emitting diode (82).

58. The apparatus of claim 10, wherein said optical energy source includes a laser source (82).

59. The apparatus of claim 10, wherein said optical energy receiver includes a silicon-based light detector (86) and a bandpass filter (88).

60. The apparatus of claim 16, wherein said bandpass filter is configured to pass a range of wavelengths including a wavelength of 930 nm.

61. The apparatus of claim 16, wherein a pass band of said bandpass filter has a width of less than approximately 100 nm.

62. The apparatus of claim 16, wherein said bandpass filter is configured to pass a range of wavelengths substantially including the wavelengths from 930 through 940 nm.

63. An automotive occupant position restraint apparatus (22) for sensing a position of an occupant (10, 16) of a motor vehicle (14), said apparatus comprising:
an optical energy source (30) configured to emit optical energy that is substantially limited to a first range of wavelengths that corresponds to an atmospheric absorption peak; and
an optical energy receiver (32) configured to receive the optical energy emitted by said optical energy source after the optical energy has been reflected within a passenger compartment (42) of the motor vehicle, a range of wavelengths that said receiver is operable to receive being substantially limited to a second range of wavelengths that corresponds to the atmospheric absorption peak.

64. The apparatus of claim 20, wherein the first range of wavelengths is approximately equal to the second range of wavelengths.

65. The apparatus of claim 20, wherein said optical energy source includes a GaAs light emitting diode (82).

66. The apparatus of claim 20, wherein said optical energy source includes a bandpass filter (84) configured to pass a range of wavelengths including a wavelength of 930 nm.

67. The apparatus of claim 20, wherein said optical energy source includes a laser source (82).

68. The apparatus of claim 20, wherein said optical energy receiver includes a silicon-based light detector (86) and a bandpass filter (88).

69. The apparatus of claim 25, wherein said bandpass filter is configured to pass a range of wavelengths including a wavelength of 930 nm.

70. The apparatus of claim 26, wherein a pass band of said bandpass filter has a width of less than approximately 100 nm.

71. The apparatus of claim 20, further comprising a control module (34) in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.

72. An automotive optical sensing system (22) comprising:
an optical energy source (30) configured to emit optical energy toward an object (10, 12, 16, 18), the optical energy being limited to a first range of wavelengths that corresponds to an atmospheric absorption peak; and
an optical energy receiver (32) configured to receive the optical energy emitted by said optical energy source after the optical energy has been reflected by the object, a range of wavelengths that said receiver is operable to receive being substantially limited to a second range of wavelengths that corresponds to the atmospheric absorption peak.

73. The system of claim 29, wherein the range of wavelengths that said optical energy receiver is operable to receive includes one of 930 nm, 1140 nm, 1400 nm, 1800 nm and 2800 nm.

74. The system of claim 29, wherein said optical energy receiver includes a silicon-based light detector (86) and a bandpass filter (88).

75. The system of claim 31, wherein a pass band of said bandpass filter has a width of less than approximately 200 nm.

76. The system of claim 29, further comprising a control module (34) in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.

77. An automotive optical sensing system (22) comprising:
an optical energy source (30) configured to emit optical energy toward an object (10, 12, 16, 18); and
an optical energy receiver (32) configured to receive the optical energy emitted by said optical energy source after the optical energy has been reflected by the object, a range of wavelengths that said receiver is operable to receive being substantially limited to a first range of wavelengths that corresponds to an atmospheric absorption peak.

78. The system of claim 34 wherein said optical energy source is configured to emit optical energy that is substantially limited to a second range of wavelengths that corresponds to the atmospheric absorption peak.

79. The system of claim 35, wherein the first range of wavelengths is approximately equal to the second range of wavelengths.

80. The system of claim 34, wherein said optical energy source includes a light emitting diode (82) and a bandpass filter (84).

81. The system of claim 37, wherein said bandpass filter is configured to pass a range of wavelengths including a wavelength of 930 nm.

82. The system of claim 34, wherein said optical energy source includes a GaAs light emitting diode (82).

83. The system of claim 34, wherein said optical energy receiver includes a silicon-based light detector (86) and a bandpass filter (88).

84. The system of claim 40, wherein said bandpass filter is configured to pass a range of wavelengths including a wavelength of 930 nm.

85. The system of claim 41, wherein a pass band of said bandpass filter has a width of less than approximately 200 nm.

86. The system of claim 34, further comprising a control module (34) in communication with each of said optical energy source and said optical energy receiver, said control module being configured to:
switch said optical energy source on and off; and
analyze first light signals received by said optical energy receiver while said optical energy source is on, said analysis of the first light signals being dependent upon second light signals received by said optical energy receiver while said optical energy source is off.
